# EUROPÄISCHE PATENTSCHRIFT

(11) **EP 4 465 526 B1**
(45) Veröffentlichungstag und Bekanntmachung des Hinweises auf die Patenterteilung: **06.08.2025**
(21) Anmeldenummer: 23174389.9
(22) Anmeldetag: 19.05.2023
(51) Int. Cl.: H02S 20/23

(54) **MODULARES DACH MIT WASSERFÜHRENDEN INDACH-PV-ELEMENTEN**
MODULAR ROOF WITH WATER-BEARING IN-ROOF PHOTOVOLTAIC PANELS
TOIT MODULAIRE AVEC ÉLÉMENTS PVD EN TOIT

(43) Veröffentlichungstag der Anmeldung: 20.11.2024
(73) Patentinhaber: ecoworks GmbH, 10559 Berlin (DE)
(72) Erfinder: OEHLER, Jens Stefan, 55270 Jugenheim (DE); HEISENBERG, Emanuel, 10559 Berlin (DE); MORITZ, Karsten, 10559 Berlin (DE)
(74) Vertreter: Frick, Robert

(56) Entgegenhaltungen:
- EP-A1- 2 592 364
- DE-U1- 212012 000 105
- US-A1- 2011 041 428

## Beschreibung

Die Erfindung betrifft vorgefertigte Dachmodule mit integrierten Photovoltaikelementen sowie deren Anwendung zur Konstruktion eines Gebäudedachs, dessen wasserführende Schicht durch die Photovoltaikelemente gebildet wird. Die Dachmodule können in der energetischen Gebäudesanierung, bei Dachaufstockungen oder im Neubau eingesetzt werden.

Zum Erreichen des von zahlreichen Regierungen ausgegebenen Ziels, Emissionen und Energieverbrauch möglichst umfassend zu reduzieren, ist unter anderem eine weitreichende Sanierung des Gebäudebestands erforderlich. Vorzugsweise soll die Sanierung letztlich einen CO2-neutralen Betrieb der Gebäude ermöglichen. Für die energetische Gebäudesanierung wurden bereits in der Vergangenheit zahlreiche Ansätze entwickelt und getestet, die aber aus unterschiedlichen Gründen problembehaftet waren oder sich zumindest nicht in einem nennenswerten Umfang durchgesetzt haben. Eine "serielle Sanierung" zu CO2-neutralen oder energieeffizienten Gebäuden aufbauend auf den Prinzipien des Passivhaus-Standards wird derzeit in Deutschland als vielversprechendes Konzept diskutiert. Ein umfassendes Konzept zur seriellen Gebäudesanierung wird beispielsweise in der DE 10 2021 107 398 A1 vorgestellt. Das Konzept umfasst die vorzugsweise vollständige Einhüllung eines bestehenden Gebäudes vom Keller bis zum Dach und umfasst entsprechend bereits ein Konzept zur Konstruktion eines Gebäudedachs.

Der Einbau von Photovoltaikmodulen in Dächern ist bekannt. Die US 2011/041428 A1 offenbart eine Lösung, in der Glaspaneele mit mehreren in einer Ebene angeordneten Photovoltaikmodulen überlappend am Dachstuhl geschichtet werden. Die DE 21 2012 000 105 U1 offenbart eine Lösung, in der Photovoltaikmodule in überlappender Weise direkt am Dachstuhl geschichtet werden.

Die DE 10 2021 122 578 A1 beschreibt die Verwendung vorgefertigter Dachmodule zur Dachkonstruktion. Das dort offenbarte Konzept eignet sich zur Anwendung innerhalb eines wie in der DE 10 2021 107 398 A1 beschriebenen Verfahrens. Photovoltaikelemente können aber nur als Aufdach-System ergänzt, also mit Hilfe eines Montagegestells auf dem Dach bzw. den vorgefertigten Dachmodulen befestigt werden.

Die DE 102 03 338 A1 zeigt vorgefertigte Dachmodule mit im Indach-Prinzip integrierten Photovoltaikelemente, die also in die Dachhaut des dann resultierenden Dachs integriert sind und Funktionen wie Dachdichtigkeit und Wetterschutz mitbestimmen. Die Dachmodule sind aber aufwändig zu montieren und zur Anwendung im Rahmen eines wie in der DE 10 2021 107 398 A1 beschriebenen Verfahrens allenfalls bedingt geeignet. Außerdem sind sie hinsichtlich der Isolierung, Entlüftung und Wasserdichtigkeit verbesserungsbedürftig.

Aufgabe der Erfindung ist es, ein Konzept zur Konstruktion eines geneigten Gebäudedachs bereitzustellen, welches die Verlegung vorgefertigter Module mit Indach-Photovoltaik umfasst und die Montagezeit reduziert sowie Einsparungen in der Dachdeckung erreicht.

Vor diesem Hintergrund betrifft die Erfindung ein Dachmodul gemäß dem Anspruch 1 zur Verlegung auf einer Dachkonstruktion und Bildung einer geneigten Dachfläche, wobei das Dachmodul eine tafelförmige Basis und mehrere daran befestigte Photovoltaikelemente umfasst, welche die Basis überdecken und die Außenoberfläche des Dachmoduls bilden, wobei die Photovoltaikelemente so an der Basis befestigt sind, dass zwischen der Basis und den Photovoltaikelementen ein Hinterlüftungsspalt gebildet ist, wobei die Photovoltaikelemente auf der Basis im Raster von m Reihen und n Spalten angeordnet sind, wobei m ≥ 2 und n ≥ 1 ist, und wobei untere Randbereiche der Photovoltaikelemente einer Reihe des Rasters obere Randbereiche der Photovoltaikelemente der im Raster direkt darunter angeordneten Reihe überdecken.

Die Erfindung betrifft weiterhin ein Verfahren gemäß dem Anspruch 10 zur Konstruktion eines geneigten Gebäudedachs unter Verwendung derartiger Dachmodule, wobei die Dachmodule in vorzugsweise einer Fabrik vorgefertigt, im vorgefertigten Zustand zu einer Baustelle transportiert und zur Bildung der Dachfläche seitlich nebeneinander auf eine Dachkonstruktion aufgesetzt und daran befestigt werden.

Die Angaben "oben" und "unten" sowie die Höhendimension beziehen sich auf die "vertikale" Traufe-First-Richtung der geneigten Dachfläche bei bestimmungsgemäßer Verlegung des Dachmoduls, während sich die Breitendimension auf die "horizontale" bzw. "seitliche" Ortgang-Ortgang-Richtung bezieht. Die Reihen erstrecken sich in seitliche Richtung und die Spalten von oben nach unten.

Die Dachmodule bzw. deren Basis und die Photovoltaikelemente haben vorzugsweise jeweils eine rechteckige Gestalt. Die Summe der Photovoltaikelemente überdeckt die Basis im Wesentlichen vollflächig. Die Dachmodule umfassen vorzugsweise mindestens drei Reihen (m ≥ 3) und mindestens zwei Spalten (n ≥ 2) an Photovoltaikelementen.

Durch den schuppenartigen Überstand der oberen über die unteren Photovoltaikelemente bilden diese als wasserdichte Ebene die oberste Dachhaut, nach Art eines Schindeldachs. Die Oberfläche der Basis bildet vorzugsweise eine zweite wasserführende Ebene als zusätzliche Absicherung. Der Hinterlüftungsspalt vermeidet eine dauerhafte Durchfeuchtung der Dachmodule, ermöglicht eine tauwasserfreie Dampfdiffusion und dient zur Kühlung der Photovoltaikelemente.

Die Basis ist vorzugsweise in Holzrahmenbauweise gefertigt, umfasst also ein Rahmengerüst aus Holz oder Holzwerkstoff, das vorzugsweise beidseitig mit Platten abgedeckt ist. Einige oder alle Elemente des Rahmengerüsts, also der Außenrahmen und/oder etwaige Verstrebungen, können durch Holzstegträger gebildet werden. Die Platten ebenfalls aus Holz oder Holzwerkstoff gefertigt sein, es können aber auch z.B. Gipsfaserplatten zur Anwendung kommen. In den zwischen dem Rahmengerüst und Platten definierten Hohlräumen kann ein Dämmmaterial eingebracht sein, z.B. Zellulosematerial oder Holzfasern. Die wesentlichen Bestandteile der Basis können also aus nachwachsenden, recycelten und/oder biologisch abbaubaren Rohstoffen gefertigt sein.

Die Dicke der Dachmodule insgesamt kann zwischen 30 und 70 cm liegen, die Dicke der Basis alleine zwischen 20 und 60 cm. Diese massive Konstruktion der Basis erlaubt es, die Dachmodule so zu dimensionieren, dass ein Dachmodul von der Traufe bis zum First reicht. Es kann eine Höhe von bis zu 12 Metern haben, wobei typische Werte zwischen 4 und 8 Metern liegen. Die Breite der Dachmodule kann in Ausführungsformen zwischen 1.5 und 3 Meter sein. Wenn die vorgefertigten Dachmodule von der Traufe zum First reichen, erleichtert das die Montage vor Ort an der Baustelle erheblich, da die Dachmodule für die Konstruktion der Dachfläche lediglich nebeneinandergesetzt und fixiert werden müssen.

Die Photovoltaikelemente umfassen typischerweise Photovoltaikzellen mit typischerweise einer Kunststoff- oder Glasscheibe als transparente Abdeckung der Oberseite und der Unterseite. Vorzugsweise umfassen die Photovoltaikelemente keinen Rahmen. Dies erleichtert eine wasserdichte Einfassung in Dichtprofilen der Dachmodule. Die Dicke der Photovoltaikelemente kann in einer Ausführungsform zwischen 8 und 20 mm liegen.

Um die Photovoltaikelemente unter Freilassung des Hinterlüftungsspalts an der Basis zu befestigen, können an der Oberseite der Basis eine Lattung sowie vorzugsweise eine Konterlattung vorgesehen sein. Bevorzugt ist eine horizontal ausgerichtete Lattung und eine vertikal ausgerichtete Konterlattung. Die Lattung und Konterlattung ist vorzugsweise aus Holz, einem Holzwerkstoff oder einem Recyclingmaterial gefertigt. Die Lattung kann auf die Konterllattung aufgesetzt sein. Geeignete Befestigungselemente für die Befestigung der Photovoltaikelemente umfassen mechanische Befestigungselemente wie an der Lattung bzw. Konterlattung verschraubte Winkelelemente, an denen die Photovoltaikelemente angeschraubt, angeklebt, geklemmt oder eingehängt sein können.

Um einen Spalt zwischen den Seitenkanten zweier Photovoltaikelemente innerhalb einer Reihe wasserdicht zu gestalten, weist das Dachmodul vorzugsweise längliche Dichtprofile auf, die zwischen zwei benachbarten Photovoltaikelementen einer Reihe angeordnet und mit diesen verbunden, beispielsweise verklemmt oder verklebt sind. Seitlich und an den Ober- und Unterseiten des Dachmoduls kann ein entsprechendes Dichtprofil angeordnet sein, das einseitig mit dem randständigen Photovoltaikelement verbunden ist und eine Kontur aufweist, die eine einfache Abdichtung eines Spalts neben dem Dachelement erlaubt. Die Dichtprofile können aus Kunststoff, beispielsweise einem elastischen Kunststoff gefertigt sein. Beispiele für zwischen zwei Photovoltaikelementen angeordnete Dichtelemente umfassen umgekehrte T-Profile, deren zwei Schenkel mit der Unterseite der Photovoltaikelemente verklebt sind und deren dritter Schenkel zwischen den Seitenkanten der Photovoltaikelemente nach oben steht. Es können auch Klemmprofile zum Einsatz kommen, wie sie beispielsweise bei Pfosten-Riegel-Fassaden verwendet werden. Beispiele für randständig am Dachmodul angeordnete Dichtelemente umfassen L-Profile, von denen ein Schenkel mit der Unterseite des randständigen Photovoltaikelements verklebt ist und der andere Schenkel neben der Seitenkante des Photovoltaikelements nach oben steht. Die Form und Befestigung mit den Photovoltaikelementen ist derart, dass dann, wenn Wasser in einen Spalt zwischen seitlich nebeneinander angeordneten Photovoltaikelementen einer Reihe eindringt, es auf den Dichtprofilen nach unten abfließt und nicht in den Hinterlüftungsspalt eindringt.

Die Länge vertikal verlaufender Dichtprofile kann der Höhe der Photovoltaikelemente entsprechen und die Dichtprofile können untereinander ebenso schuppenartig auf der Basis angeordnet sein, wie die Photovoltaikelemente. Mit anderen Worten können sich also untere Randbereiche der Dichtprofile einer Reihe des Rasters obere Randbereiche der Dichtprofile der im Raster direkt darunter angeordneten Reihe überdecken. Alternativ können die Dichtprofile vom First bis zur Traufe als durchgehende Profile ausgebildet und so profiliert sein, dass sie die Stufen der schuppenförmig verlegten PV-Module aufnehmen können.

Die Dichtprofile können ebenfalls an der Lattung bzw. Konterlattung befestigt, beispielsweise verschraubt sein. Sie können die Befestigung der Photovoltaikelemente an der Lattung bzw. Konterlattung unterstützen oder auch bewirken.

Um eine schuppenartige Verlegung der Photovoltaikelemente und ggf. der Dichtprofile auf der horizontal ausgerichteten Lattung bzw. Konterlattung zu ermöglichen, kann vorgesehen sein, dass einzelne Elemente der horizontalen Lattung bzw. Konterlattung unterschiedliche Stärken haben und die Oberseite von Photovoltaikelementen bzw. Dichtprofilen auf einem dünneren dieser Elemente aufliegt, als die Unterseite von Photovoltaikelementen bzw. Dichtprofilen.

Die Verkabelung der Photovoltaikelemente innerhalb des Dachmoduls erfolgt vorzugsweise im Hinterlüftungsspalt. In einer Ausführungsform kann vorgesehen sein, dass die Verkabelung aller Photovoltaikelemente des Dachmoduls zum oberen Ende, also dem Firstbereich geführt wird. Dort kann eine Verkabelung aller Dachmodule untereinander und die Kabeleinführung in das Gebäude erfolgen.

Um die Dachmodule beim Verlegen auf der Dachkonstruktion in einfacher Weise präzise nebeneinandersetzen und fixieren zu können, und auch um die Übergänge mit möglichst geringem Aufwand möglichst wasserdicht gestalten zu können, können die seitlichen Stöße der Dachmodule profiliert sein. Beispielsweise kann vorgesehen sein, dass die randständigen Photovoltaikelemente, mit oder ohne Elementen der Lattung bzw. Konterlattung, an einer Seite der Dachmodule über die Basis hinausstehen und an der gegenüberliegenden Seite im selben Maße rückspringen. Dasselbe gilt für Platten einer in Rahmenbauweise gefertigten Basis. Die seitlich überstehenden Abschnitte können in die korrespondierenden Rücksprünge der benachbarten Dachmodule eingreifen. Eine Verbindung kann entlang der Eingriffsbereiche durch normal zur Ebene der Dachmodule geführte Schrauben, Nägel oder Bolzen erfolgen.

Die Spalte zwischen den Dachmodulen können in geeigneter Weise wasserdicht verschlossen werden, beispielsweise durch Aufsetzen von U-Profilen oder Klemmprofilen auf geeignete Konturen von Dichtprofilen. An der Oberseite des Dachmoduls kann ein Firstblech über die oberen Randbereiche der Photovoltaikelemente der obersten Reihe des Rasters oder über eine geeignete Kontur eines Dichtelements gesetzt werden.

Die Dachneigung beträgt vorzugsweise mindestens 5°. Bei der Dachkonstruktion handelt es sich vorzugsweise um ein Pfettendach oder Sparrendach.

Weitere Einzelheiten und Vorteile der Erfindung ergeben sich aus dem nachfolgend anhand der Figuren beschriebenen Ausführungsbeispiel. Die Figuren zeigen:

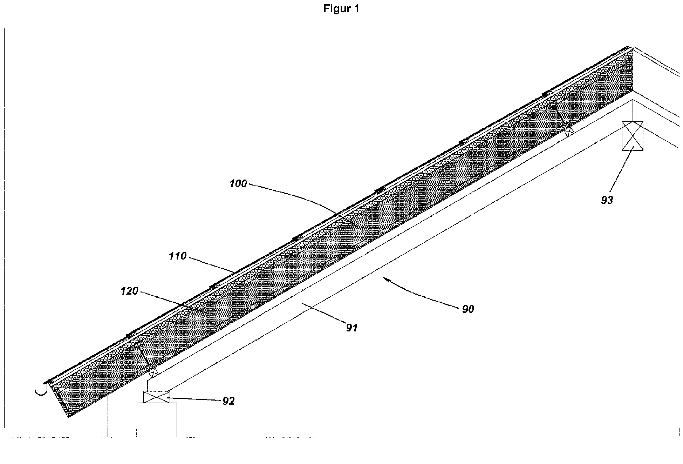

- Figur 1:: eine Querschnittansicht durch ein Gebäudedach mit einem darauf fixierten erfindungsgemäßen Dachmodul, das die Dachfläche bildet;

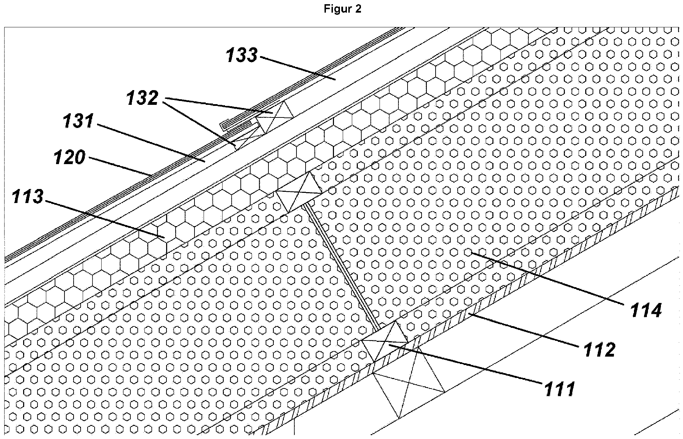

- Figur 2:: eine Detailansicht eines Bereichs aus der Figur 1;

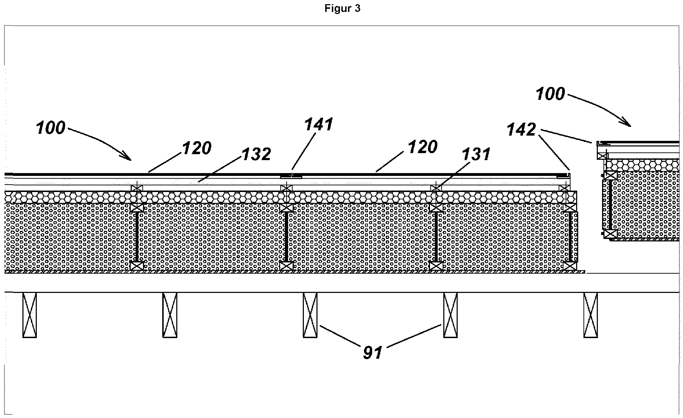

- Figur 3:: eine Längsschnittansicht der Anordnung, der ein weiteres erfindungsgemäßes Dachmodul seitlich hinzugefügt wird;

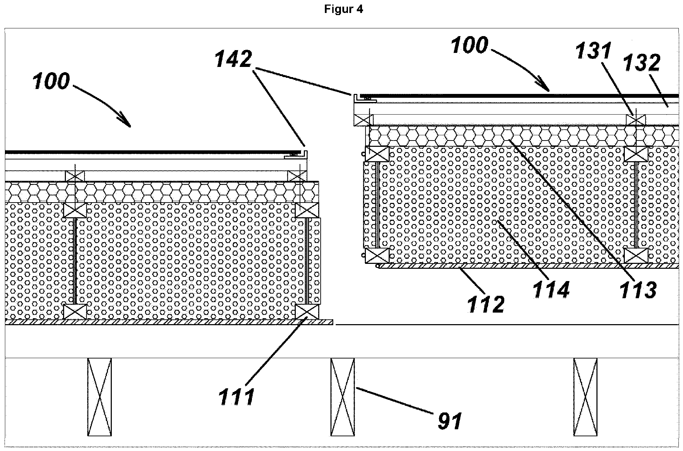

- Figur 4:: eine Detailansicht eines Bereichs aus der Figur 3;

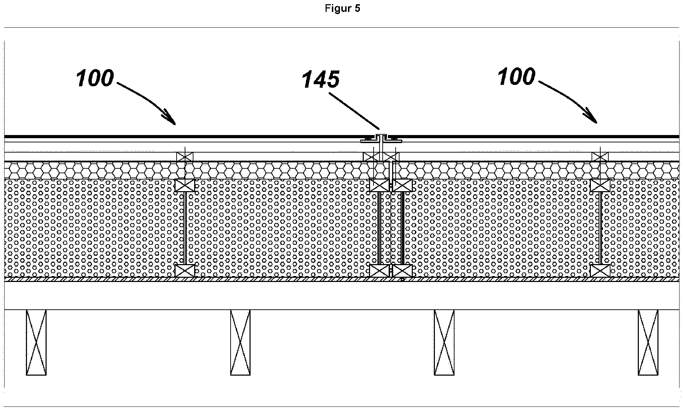

- Figur 5:: die Detailansicht der Figur 3 mit fertig hinzugefügtem weiteren Dachmodul.

Die Figuren zeigen ein erfindungsgemäßes Dachmodul 100, das auf einer Dachkonstruktion 90 aufliegt. Bei der Dachkonstruktion 90 handelt es sich um ein ca. 30° geneigtes Pfettendach mit einer Reihe von Dachsparren 91, einer Fußpfette 92 und einer Firstpfette 93. Das Dachmodul 100 erstreckt sich einteilig vom First bis zur Traufe.

Das Dachmodul 100 weist eine rechteckige tafelförmige Basis 110 und mehrere rechteckige Photovoltaikelemente 120 auf, die auf der Basis 110 in einem Raster befestigt sind.

Die Basis 110 ist in Holzrahmenbauweise gefertigt und umfasst also ein Rahmengerüst 111 aus Holzstegträgern, das beidseitig mit Platten 112, 113 abgedeckt ist. In dem zwischen dem Rahmengerüst 111 und den Platten definierten Hohlraum ist ein Dämmmaterial 114 aus Holzfasern eingebracht. Die Photovoltaikelemente 120 sind vom Glas-Glas-Typ und umfassen zwischen zwei Glasflächen eingefasste Photovoltaikzellen.

An der Oberseite der Basis 110 ist eine vertikal ausgerichtete Konterlattung 131 und daran eine horizontal ausgerichtete Lattung 132 befestigt. Sowohl die Lattung als auch die Konterlattung besteht aus Holz oder Holzwerkstoff. Die Photovoltaikelemente 120 sind an der Lattung 132 befestigt, indem sie einerseits in Winkelelemente 133 eingehängt und andererseits an unten näher beschriebene Dichtprofile geklebt sind. Die Konterlattung 131 und Lattung 132 definiert einen Abstand zwischen der Basis 110 und der Photovoltaikelemente 120 und mithin einen Hinterlüftungsspalt 133.

Die Photovoltaikelemente 120 bilden die Außenoberfläche des Dachmoduls 100. Charakteristisch für die vorliegende Erfindung ist eine schuppenartige Anordnung der Photovoltaikelemente 120, dass also untere Randbereiche der Photovoltaikelemente einer Reihe des Rasters obere Randbereiche der Photovoltaikelemente der im Raster direkt darunter angeordneten Reihe überdecken. So bilden die Photovoltaikelemente 120 des Dachmoduls 100 selbst als wasserdichte Ebene die oberste Dachhaut, nach Art eines Schindeldachs.

Zwischen zwei benachbarten Photovoltaikelementen 120 einer Reihe sind längliche Dichtprofile 141 in Form umgekehrter T-Profile angeordnet. An der freiliegenden Seite der randständigen Photovoltaikelemente des Dachmoduls 100 sind längliche Dichtprofile 142 in Form von L-Profilen angeordnet. Zwei Schenkel der T-Profile bzw. ein Schenkel des L-Profils sind mit der Unterseite der Photovoltaikelemente 120 verklebt und der andere Schenkel steht zwischen bzw. neben den Photovoltaikelementen 120 nach oben.

Die Dichtprofile 141, 142 sind auf der Lattung 132 befestigt und dienen somit auch der Befestigung der Photovoltaikelemente 120 an der Lattung 132. Die Länge der Dichtprofile 141, 142 entspricht der Höhe der Photovoltaikelemente 120 und die Dichtprofile 141, 142 sind untereinander ebenso schuppenartig gestaffelt, wie die Photovoltaikelemente 120, indem untere Randbereiche der Dichtprofile einer Reihe des Rasters obere Randbereiche der Dichtprofile der im Raster direkt darunter angeordneten Reihe überdecken.

Für die schuppenartige Verlegung der Photovoltaikelemente 120 und der Dichtprofile 141, 142 sind die Elemente der Lattung 132 in zwei unterschiedlichen Stärken ausgeführt und die Oberseiten der Photovoltaikelemente 120 und Dichtprofile 141, 142 liegen auf einem dünneren dieser Elemente auf, während die Unterseiten der Photovoltaikelemente 120 und Dichtprofile 141, 142 auf einem dickeren dieser Elemente aufliegen.

An den Ober- und Unterseiten des Dachmoduls 100 sind in den Figuren nicht dargestellte horizontale Dichtprofile angeordnet, die einseitig mit Ober- bzw. Unterseiten von Photovoltaikelementen 120 der obersten bzw. untersten Reihe verbunden sind.

Die seitlichen Stöße der Dachmodule 100 sind profiliert, indem die randständigen Photovoltaikelemente 120 nebst Lattung 132 und Konterlattung 131 an einer Seite der Dachmodule über die Basis 110 hinausstehen und an der gegenüberliegenden Seite im selben Maße rückspringen. Dasselbe gilt in der umgekehrten Richtung für die rückseitigen Platten 112 der Basis 110.

Im Rahmen eines erfindungsgemäßen Verfahrens zur Dachkonstruktion werden die Dachmodule 100 industriell vorgefertigt, im vorgefertigten Zustand zu einer Baustelle transportiert und zur Bildung der Dachfläche seitlich nebeneinander auf die Dachkonstruktion 90 aufgesetzt und daran befestigt. Die profilierten seitlichen Stöße der Dachmodule erleichtern die Verlegung und Fixierung, indem die an einem Dachmodul 100 seitlich überstehenden Abschnitte von Photovoltaikelementen 120, Lattung 132 und Konterlattung 131 sowie Platten 112 in die korrespondierenden Rücksprünge des benachbarten Dachmoduls 100 eingreifen. Zur Verbindung werden entlang des Eingriffsbereichs von hinten Schrauben durch die Platte 112 getrieben. An der Oberseite werden U-Profile 145 über die abstehenden Schenkel der randständigen L-förmigen Dichtprofile 142 gesetzt.

Die vorliegende Erfindung verwirklicht in modulares Indach-System, das durch den Wegfall eines wasserführenden (Metall-)Blechs ein geringeres Gewicht und eine bessere Ökobilanz aufweist, bei gleichzeitig verringertem Montageaufwand und besserer Flächenausnutzung für die Stromerzeugung. Die vorgefertigten Dachmodule sind gedämmt und wasserdicht. Sie sind montagefertig und können sehr schnell zu einem wasserdichten und fertigen Dach montiert werden, indem ein Dachmodul neben das andere gelegt und fixiert wird. Die Vorfertigung erlaubt eine hohe Qualität und senkt die Kosten. Die hohe Montagegeschwindigkeit erlaubt es, auch bewohnte Gebäude zu sanieren, da man sehr schnell wieder einen witterungsfesten Zustand erreicht und das Risiko für Wasserschäden bei einem offenen Dach minimiert werden.

## Patentansprüche

1. Dachmodul (100) zur Verlegung auf einer Dachkonstruktion (90) und Bildung einer geneigten Dachfläche,
wobei das Dachmodul (100) eine tafelförmige Basis (110) und mehrere daran befestigte Photovoltaikelemente (120) umfasst, welche die Basis (110) überdecken und die Außenoberfläche des Dachmoduls (100) bilden;
wobei die Photovoltaikelemente (120) so an der Basis (110) befestigt sind, dass zwischen der Basis (110) und den Photovoltaikelementen (120) ein Hinterlüftungsspalt (133) gebildet ist;
wobei die Photovoltaikelemente (120) auf der Basis (110) im Raster von m Reihen und n Spalten angeordnet sind, wobei m ≥ 2 und n ≥ 1 ist; und
wobei untere Randbereiche der Photovoltaikelemente (120) einer Reihe des Rasters obere Randbereiche der Photovoltaikelemente (!20) der im Raster direkt darunter angeordneten Reihe überdecken.

2. Dachmodul nach Anspruch 1, **dadurch gekennzeichnet, dass** die Dachmodule (100) mindestens drei Reihen (m ≥ 3) und mindestens zwei Spalten (n ≥ 2) an Photovoltaikelementen (120) umfassen.

3. Dachmodul nach einem der vorhergehenden Ansprüche, **dadurch gekennzeichnet, dass** die Basis (110) in Holzrahmenbauweise gefertigt ist und ein Rahmengerüst (111) aus Holz oder Holzwerkstoff umfasst, das beidseitig mit Platten (112, 113) abgedeckt ist, wobei in den zwischen dem Rahmengerüst (111) und Platten (112, 113) definierten Hohlräumen ein Dämmmaterial (114) eingebracht ist.

4. Dachmodul nach einem der vorhergehenden Ansprüche, **dadurch gekennzeichnet, dass** an der Oberseite der Basis (110) eine vertikale Konterlattung (131) sowie eine horizontale Lattung (132) vorgesehen ist, und dass die Photovoltaikelemente (120) an der horizontalen Lattung (132) befestigt sind.

5. Dachmodul nach Anspruch 4, **dadurch gekennzeichnet, dass** einzelne Elemente der Lattung (132) unterschiedliche Stärken haben und die Oberseiten von Photovoltaikelementen (120) auf dünneren dieser Elemente aufliegen als die Unterseiten.

6. Dachmodul nach einem der vorhergehenden Ansprüche, **dadurch gekennzeichnet, dass** zwischen zwei benachbarten Photovoltaikelementen (120) einer Reihe längliche und vertikal verlaufende Dichtprofile (141) angeordnet und mit diesen verbunden sind, wobei vorzugsweise die Länge der Dichtprofile (141) der Höhe der Photovoltaikelemente (120) entspricht und untere Randbereiche der Dichtprofile (141) einer Reihe des Rasters obere Randbereiche der Dichtprofile (141) der im Raster direkt darunter angeordneten Reihe überdecken.

7. Dachmodul nach einem der vorhergehenden Ansprüche, **dadurch gekennzeichnet, dass** an den Seiten des Dachmoduls (100) längliche und vertikal verlaufende Dichtprofile (142) angeordnet sind, die einseitig mit randständigen Photovoltaikelementen (120) verbunden sind, wobei vorzugsweise die Länge der Dichtprofile (142) der Höhe der Photovoltaikelemente (120) entspricht und untere Randbereiche der Dichtprofile (142) einer Reihe des Rasters obere Randbereiche der Dichtprofile (142) der im Raster direkt darunter angeordneten Reihe überdecken.

8. Dachmodul nach einem der vorhergehenden Ansprüche, **dadurch gekennzeichnet, dass** an der Oberseite und ggf. auch der Unterseite des Dachmoduls (100) längliche und horizontal verlaufende Dichtprofile angeordnet sind, die einseitig mit Ober- bzw. Unterseiten von Photovoltaikelementen (120) der obersten bzw. untersten Reihe verbunden sind.

9. Dachmodul nach einem der vorhergehenden Ansprüche, **dadurch gekennzeichnet, dass** deren seitliche Stöße profiliert sind, indem randständige Photovoltaikelemente (120) sowie ggf. Elemente einer Lattung (131) bzw. Konterlattung (132) und/oder Platten (112, 113) einer in Rahmenbauweise gefertigten Basis (110) an einer Seite über die Basis (110) hinausstehen und an der gegenüberliegenden Seite im selben Maße rückspringen.

10. Verfahren zur Konstruktion eines geneigten Gebäudedachs unter Verwendung von Dachmodulen (100) gemäß einem der vorhergehenden Ansprüche, wobei die Dachmodule (100) vorgefertigt, im vorgefertigten Zustand zu einer Baustelle transportiert und zur Bildung der Dachfläche seitlich nebeneinander auf eine Dachkonstruktion (90) aufgesetzt und daran befestigt werden.

11. Verfahren nach Anspruch 10, **dadurch gekennzeichnet, dass** die Dachmodule (100) von der Traufe bis zum First reichten und für die Konstruktion der geneigten Dachfläche lediglich eine Reihe an Dachmodulen (100) nebeneinandergesetzt wird.

12. Verfahren nach Anspruch 10 oder 11, **dadurch gekennzeichnet, dass** die Dachmodule (100) gemäß Anspruch 9 ausgebildet sind und so zueinander angeordnet werden, dass die seitlich überstehenden Abschnitte eines Dachmoduls (100) in die korrespondierenden Rücksprünge eines benachbarten Dachmoduls (100) eingreifen, und entlang der Eingriffsbereiche durch normal zur Ebene der Dachmodule (100) geführte Verbindungselemente verbunden werden.

13. Verfahren nach einem der Ansprüche 10 bis 12, **dadurch gekennzeichnet, dass** die Spalte zwischen den Dachmodulen (100) durch Aufsetzen von U-Profilen (145) auf an den Seiten der Dachmodule (100) vorhandene Konturen abgedeckt werden, und/oder dass an der Oberseite der Dachmodule (100) ein Firstblech über die oberen Randbereiche der Photovoltaikelemente (120) der obersten Reihe des Rasters oder über eine an der Oberseite der Dachmodule (100) vorhandene Konturen gesetzt wird.

14. Verfahren nach einem der Ansprüche 10 bis 13, **dadurch gekennzeichnet, dass** es sich bei der Dachkonstruktion (90) um ein Pfettendach oder Sparrendach handelt.

15. Verfahren nach einem der Ansprüche 10 bis 14, **dadurch gekennzeichnet, dass** die Dachneigung 5° oder mehr beträgt.

## Claims

1. Roof module (100) for installation on a roof structure (90) and formation of a pitched roof surface,
wherein the roof module (100) comprises a panel-shaped base (110) and several photovoltaic elements (120) fastened thereto, which cover the base (110) and form the outer surface of the roof module (100);
wherein the photovoltaic elements (120) are fastened to the base (110) in such a manner that a ventilation gap (133) is formed between the base (110) and the photovoltaic elements (120);
wherein the photovoltaic elements (120) are arranged on the base (110) in a grid of m rows and n columns, where m ≥ 2 and n ≥ 1; and
wherein lower edge regions of the photovoltaic elements (120) of one row of the grid overlap upper edge regions of the photovoltaic elements (120) of the row arranged directly below in the grid.

2. Roof module according to claim 1, **characterized in that** the roof modules (100) comprise at least three rows (m ≥ 3) and at least two columns (n ≥ 2) of photovoltaic elements (120).

3. Roof module according to any one of the preceding claims, **characterized in that** the base (110) is manufactured in timber frame construction and comprises a frame structure (111) of wood or wood-based material, which is covered on both sides with panels (112, 113), wherein an insulating material (114) is introduced into the cavities defined between the frame structure (1111) and panels (112, 113).

4. Roof module according to any one of the preceding claims, **characterized in that** a vertical counter-battening (131) and a horizontal battening (132) are provided on the upper side of the base (110), and that the photovoltaic elements (120) are fastened to the horizontal battening (132).

5. Roof module according to claim 4, **characterized in that** individual elements of the battening (132) have different thicknesses, and the upper sides of photovoltaic elements (120) rest on thinner ones of these elements than the undersides.

6. Roof module according to any one of the preceding claims, **characterized in that** elongated and vertically extending sealing profiles (141) are arranged between two adjacent photovoltaic elements (120) of a row and are connected thereto, wherein preferably the length of the sealing profiles (141) corresponds to the height of the photovoltaic elements (120), and lower edge regions of the sealing profiles (141) of one row of the grid overlap upper edge regions of the sealing profiles (141) of the row arranged directly below in the grid.

7. Roof module according to any one of the preceding claims, **characterized in that** elongated and vertically extending sealing profiles (142) are arranged at the sides of the roof module (100), which are connected on one side to marginal photovoltaic elements (120), wherein preferably the length of the sealing profiles (142) corresponds to the height of the photovoltaic elements (142), and lower edge regions of the sealing profiles (142) of one row of the grid overlap upper edge regions of the sealing profiles (142) of the row arranged directly below in the grid.

8. Roof module according to any one of the preceding claims, **characterized in that** elongated and horizontally extending sealing profiles are arranged at the top side and optionally also the underside of the roof module (100), which are connected on one side to the upper or lower sides of photovoltaic elements (120) of the topmost or bottommost row.

9. Roof module according to any one of the preceding claims, **characterized in that** their lateral joints are profiled **in that** marginal photovoltaic elements (120) and optionally elements of a battening (131) or counter-battening (132) and/or panels (112, 113) of a base (110) manufactured in frame construction protrude beyond the base on one side and recede to the same extent on the opposite side.

10. Method for constructing a pitched building roof using roof modules (100) according to any one of the preceding claims, wherein the roof modules (100) are prefabricated, transported to a construction site in prefabricated state, and are placed side by side onto a roof structure (90) and fastened thereto to form the roof surface.

11. Method according to claim 10, **characterized in that** the roof modules (100) extend from the eaves to the ridge, and for constructing the pitched roof surface, only one row of roof modules (100) is placed side by side.

12. Method according to claim 10 or 11, **characterized in that** the roof modules (100) are configured according to claim 9 and are arranged with respect to one another such that the laterally protruding sections of one roof module (100) engage into the corresponding recesses of an adjacent roof module (100), and are connected along the engagement areas by fastening elements guided perpendicular to the plane of the roof modules (100).

13. Method according to any one of claims 10 to 12, **characterized in that** the gaps between the roof modules (100) are covered by placing U-profiles (145) onto contours present at the sides of the roof modules (100), and/or that a ridge flashing is placed on the upper side of the roof modules (100) over the upper edge regions of the photovoltaic elements (120) of the topmost row of the grid or over a contour present at the upper side of the roof modules (100).

14. Method according to any one of claims 10 to 13, **characterized in that** the roof structure (90) is a purlin roof or rafter roof.

15. Method according to any one of claims 10 to 14, **characterized in that** the roof pitch is 5° or more.

## Revendications

1. Module de toit (100) destiné à être posé sur une structure de toit (90) en formant une surface de toit inclinée,
dans lequel le module de toit (100) comprend une base (110) en forme de panneau et plusieurs éléments photovoltaïques (120) fixés sur celle-ci, lesquels recouvrent la base (110) et forment la surface extérieure du module de toit (100) ;
dans lequel les éléments photovoltaïques (120) sont fixés sur la base (110) de manière à former une fente de ventilation arrière (133) entre la base (110) et les éléments photovoltaïques (120) ;
dans lequel les éléments photovoltaïques (120) sont disposés sur la base (100) dans la trame de m rangées et de n colonnes, dans lequel m ≥ 2 et n ≥ 1 ; et
dans lequel des zones de bord inférieures des éléments photovoltaïques (120) d'une rangée de la trame recouvrent des zones de bord supérieures des éléments photovoltaïques (120) de la rangée disposée directement en dessous dans la trame.

2. Module de toit selon la revendication 1, **caractérisé en ce que** les modules de toit (100) comprennent au moins trois rangées (m ≥ 3) et au moins deux colonnes (n ≥ 2) sur des éléments photovoltaïques (120).

3. Module de toit selon l'une quelconque des revendications précédentes, **caractérisé en ce que** la base (110) est produite à la manière d'un cadre en bois et comprend une ossature de cadre (111) en bois ou en matériau dérivé du bois, qui est recouverte de part et d'autre avec des plaques (112, 113), dans lequel un matériau isolant (114) est introduit dans les cavités définies entre l'ossature de cadre (111) et les plaques (112, 113).

4. Module de toit selon l'une quelconque des revendications précédentes, **caractérisé en ce qu'**une contre-latte verticale (131) ainsi qu'une latte horizontale (132) sont prévues sur le côté supérieur de la base (110), et que les éléments photovoltaïques (120) sont fixés sur la latte horizontale (132).

5. Module de toit selon la revendication 4, **caractérisé en ce que** divers éléments de la latte (132) présentent des épaisseurs différentes et les côtés supérieurs d'éléments photovoltaïques (120) reposent sur des éléments plus fins desdits éléments que les côtés inférieurs.

6. Module de toit selon l'une quelconque des revendications précédentes, **caractérisé en ce que** des profilés d'étanchéité (141) allongés et s'étendant verticalement sont disposés entre deux éléments photovoltaïques (120) adjacents d'une rangée et sont reliés à ceux-ci, dans lequel de préférence la longueur des profilés d'étanchéité (141) correspond à la hauteur des éléments photovoltaïques (120) et des zones de bord inférieures des profilés d'étanchéité (141) d'une rangée de la trame recouvrent des zones de bord supérieures des profilés d'étanchéité (141) de la rangée disposée directement en dessous dans la trame.

7. Module de toit selon l'une quelconque des revendications précédentes, **caractérisé en ce que** des profilés d'étanchéité (142) allongés et s'étendant verticalement sont disposés sur les côtés du module de toit (100), lesquels sont reliés d'un côté à des éléments photovoltaïques (120) sur le bord, dans lequel de préférence la longueur des profilés d'étanchéité (142) correspond à la hauteur des éléments photovoltaïques (120) et des zones de bord inférieures des profilés d'étanchéité (142) d'une rangée de la trame recouvrent des zones de bord supérieures des profilés d'étanchéité (142) de la rangée disposée directement en dessous dans la trame.

8. Module de toit selon l'une quelconque des revendications précédentes, **caractérisé en ce que** des profilés d'étanchéité allongés et s'étendant horizontalement sont disposés sur le côté supérieur et éventuellement également sur le côté inférieur du module de toit (100), qui sont reliés d'un côté à des côtés supérieurs ou inférieurs d'éléments photovoltaïques (120) de la rangée la plus haute ou la plus basse.

9. Module de toit selon l'une quelconque des revendications précédentes, **caractérisé en ce que** ses joints latéraux sont profilés **en ce que** des éléments photovoltaïques (120) sur le bord et éventuellement des éléments d'une latte (131) ou d'une contre-latte (132) et/ou des plaques (112, 113) d'une base (110) fabriquée à la manière d'un cadre font saillie de la base (110) sur un côté et reviennent en arrière de la même dimension sur le côté opposé.

10. Procédé de construction d'un toit de bâtiment incliné en utilisant des modules de toit (100) selon l'une quelconque des revendications précédentes, dans lequel les modules de toit (100) sont préfabriqués, sont transportés vers un chantier dans l'état préfabriqué et sont placés sur une structure de toit (90) côte à côte latéralement pour former la surface de toit et y sont fixés.

11. Procédé selon la revendication 10, **caractérisé en ce que** les modules de toit (100) s'étendent de l'avant-toit jusqu'au faîte et seulement une rangée de modules de toit (100) est placée côte à côte pour la construction de la surface de toit inclinée.

12. Procédé selon la revendication 10 ou 11, **caractérisé en ce que** les modules de toit (100) sont réalisés selon la revendication 9 et sont disposés de telle sorte les uns par rapport aux autres que les sections dépassant latéralement d'un module de toit (100) viennent en prise avec les retraits correspondants d'un module de toit (100) adjacent et sont reliées le long des zones de prise par des éléments de liaison guidés de manière normale par rapport au plan des modules de toit (100).

13. Procédé selon l'une quelconque des revendications 10 à 12, **caractérisé en ce que** les fentes entre les modules de toit (100) sont recouvertes par le placement de profilés en U (145) sur des contours présents sur les côtés des modules de toit (100), et/ou qu'une tôle de faîtage est placée au-dessus des zones de bord supérieures des éléments photovoltaïques (120) de la rangée la plus haute de la trame ou au-dessus d'un contour présent sur le côté supérieur des modules de toit (100) sur le côté supérieur des modules de toit (100).

14. Procédé selon l'une des revendications 10 à 13, **caractérisé en ce que** la structure de toit (90) est un toit à pannes ou un toit à chevrons.

15. Procédé selon l'une quelconque des revendications 10 à 14, **caractérisé en ce que** l'inclinaison de toit est supérieure ou égale à 5°.
